# EUROPEAN PATENT SPECIFICATION

(11) **EP 4 344 232 B1**
(45) Date of publication and mention of the grant of the patent: **14.01.2026**
(21) Application number: 22903500.1
(22) Date of filing: 07.12.2022
(51) Int. Cl.: G11B 27/031, G11B 27/34, H04N 21/472, H04N 21/854

(54) **METHOD AND APPARATUS FOR GENERATING VIDEO EDITING TEMPLATE, DEVICE, AND STORAGE MEDIUM**
VERFAHREN UND VORRICHTUNG ZUR ERZEUGUNG EINER VIDEOBEARBEITUNGSVORLAGE, VORRICHTUNG UND SPEICHERMEDIUM
PROCÉDÉ ET APPAREIL POUR GÉNÉRER UN MODÈLE D'ÉDITION VIDÉO, DISPOSITIF ET SUPPORT DE STOCKAGE

(30) Priority: 09.12.2021 CN 202111501326
(43) Date of publication of application: 27.03.2024
(73) Proprietor: Beijing Zitiao Network Technology Co., Ltd., Beijing 100190 (CN)
(72) Inventor: LI, Xinwei, Beijing 100086 (CN); ZHAO, Jianfan, Beijing 100086 (CN)
(74) Representative: Marks & Clerk LLP
(86) International application number: PCT/CN2022/137181
(87) International publication number: WO 2023/104078

(56) References cited:
- EP-A1- 4 336 822
- WO-A1-2021/073315
- WO-A1-2021/237619
- CN-A- 103 839 562
- CN-A- 112 422 831
- CN-A- 112 866 796
- CN-A- 113 590 247
- CN-A- 113 691 836
- US-A1- 2023 353 844
- US-B1- 7 890 867

## Description

### Technical Field

The present disclosure relates to the field of data processing, and in particular, to a method and an apparatus for generating a video editing template, a device, and a storage medium.

### Background

With the popularity of short-video multimedia technology, people's interest in video creation is increasing, and peripheral functions of video creation are becoming more and more abundant in order to satisfy the growing enthusiasm of video creation. For example, video editing templates that provide video authoring scripts to users are receiving increasing attention.

CN 112866796 A describes a video generation method and device, electronic equipment and a storage medium. The method comprises the following steps: receiving a first trigger operation using a target template; in response to the first trigger operation, displaying a target template homepage of the target template, and displaying scene description information of each target scene of the target template in the target template homepage; receiving a second trigger operation of adding a scene video of any target scene; in response to the second trigger operation, adding a scene video of a target scene corresponding to the second trigger operation; synthesizing the scene videos of the target scenes into a target video according to the sequence of the target scenes in the target template homepage.

CN 113590247 A describes a text creation method and a computer program product, and the text creation method is used for generating a text describing an object, and comprises the steps of obtaining object information; in response to the text generation operation, generating a description text for describing the object according to the object information, the description text comprising at least one sub-shot script, and the sub-shot script comprising a title and lines corresponding to the title; displaying a description text display interface, wherein the description text display interface comprises at least one sub-lens display area used for displaying sub-lens scripts, and the sub-lens display area comprises a title area used for displaying titles and a line area used for displaying lines; and in response to a rewriting operation for the description text displayed on the description text display interface, obtaining rewriting information, rewriting lines in the description text according to the rewriting information, and displaying the rewritten lines in the line area.

EP 4336822 A1 is a later published application with a claim to an earlier priority date, cited during examination of the application under Article 54(3) EPC. EP 4336822 A1 describes a video generation method and apparatus, and a device and a storage medium. The method comprises: upon receiving a preset trigger operation for a target video editing template, firstly, displaying photographing indication information of storyboard lenses corresponding to the target video editing template, wherein the photographing indication information is used for indicating photographing modes and/or photographing content features corresponding to the storyboard lenses; then, respectively acquiring user materials for each storyboard lens; and according to the acquired user materials, generating a target result video corresponding to the target video editing template.

### Disclosure of the Invention

The present disclosure provides a method for generating a video editing template, which provides a function of creating a video editing template for a user, so that the user can create a video editing template meeting personalized demands on creation by the user.

In a first aspect, the present disclosure provides a method as set out in claim 1.

In an embodiment, the template editing page comprises a material uploading control, and after generating the set of storyboard descriptions in response to an addition operation for at least one of the storyboard scenes or shooting indication information on the template editing page, the method further comprises:
in response to a start trigger operation for the material uploading control, displaying a material uploading window corresponding to the storyboard scenes in the set of storyboard descriptions on the template editing page; wherein the material uploading window is used for setting initial video materials for storyboard scenes.

In an embodiment, after the displaying, on the template editing page, a material uploading window corresponding to storyboard scenes in the set of storyboard descriptions in response to a start trigger operation for the material uploading control, the method further comprises:
in response to a close trigger operation for the material uploading control, hiding the material uploading window displayed on the template editing page.

In an embodiment, prior to generating the target video editing template based on the set of storyboard descriptions, the method further comprises:
in response to an editing operation for at least one of storyboard scenes or shooting indication information in the set of storyboard descriptions, updating the set of storyboard descriptions; wherein the editing operation comprises at least one of modification operation, a deletion operation or a sequence adjustment operation.

In an embodiment, prior to generating the target video editing template based on the set of storyboard descriptions and the video clip description information, the method further comprises:
receiving a speech-line added to the template editing page for the video clip description information; wherein the speech-line is used for indicating shooting speech lines for the storyboard scenes corresponding to the video clip description information;
correspondingly, the generating a target video editing template based on the set of storyboard descriptions and the video clip description information comprises:
   generating a target video editing template based on the set of storyboard descriptions, the video clip description information and the speech-line.

In an embodiment, the unit row in the first table comprises at least one subunit row, where the subunit row has a corresponding relationship with storyboard scene, and the subunit row is used to store at least one of shooting indication information of storyboard scenes or a material uploading window, where the material uploading window is used to set initial video materials for the storyboard scenes; the method further comprises:
in response to a preset selection operation for a first storyboard scene in the first table, displaying the editing floating window for a subunit row corresponding to the first storyboard scene; and
in response to a trigger operation for a deletion option on the editing floating window, deleting the subunit row and at least one of shooting indication information of storyboard scenes or material uploading window stored in the subunit row.

In an embodiment, after the displaying the editing floating window for the subunit row corresponding to the first storyboard scene in response to a preset trigger operation for the first storyboard scene in the first table, the method further comprises:
in response to the trigger operation for an addition option on the editing floating window, adding at least one subunit row in the unit row to which the subunit row belongs based on a position of the subunit row.

In an embodiment, after generating the target video editing template based on the set of storyboard descriptions, the method further comprises:
releasing the target video editing template.

In a second aspect, the present disclosure provides an apparatus for generating a video editing template, as set out in claim 9.

In a third aspect, the present disclosure provides a computer-readable storage medium having stored thereon instructions that, when executed on a terminal device, cause the terminal device to implement a method according to the first aspect.

In a fourth aspect, the present disclosure provides a computer program product comprising computer programs/instructions which, when executed by a processor, implement a method according to the first aspect.

### Description of the Drawings

The accompanying drawings, which are incorporated in and constitute a part of this description, illustrate embodiments consistent with the present disclosure and, together with the description, serve to explain the principles of the disclosure.

In order to more clearly illustrate the embodiments of the present disclosure or technical solutions in the related art, the drawings used in the description of the embodiments or related technologies will be briefly described below, and apparently, those skilled in the art may obtain other drawings based on these drawings without any inventive labor.
Fig. 1 is a flowchart of a method for generating a video editing template provided by an embodiment of the present disclosure;
Fig. 2 is a schematic diagram of a video editing template display page provided by an embodiment of the present disclosure;
Fig. 3 is a schematic diagram of a template editing page provided by an embodiment of the present disclosure;
Fig. 4 is a schematic diagram of another template editing page provided by an embodiment of the present disclosure;
Fig. 5 is a schematic diagram of a further template editing page provided by an embodiment of the present disclosure;
Fig. 6 is a schematic structural diagram of an apparatus for generating a video editing template provided by an embodiment of the present disclosure;
Fig. 7 is a schematic structural diagram of a device for generating a video editing template provided by an embodiment of the present disclosure.

### Embodiment

In order that the above objects, features and advantages of the present disclosure may be more clearly understood, aspects of the present disclosure will be further described below. It should be noted that, in the case of no conflict, the embodiments and features in the embodiments of the present disclosure may be combined with each other.

In the following description, numerous specific details are set forth in order to provide a thorough understanding of the present disclosure, but the present disclosure may be practiced otherwise than as described herein; apparently, the embodiments disclosed in the description are only a few instead of all embodiments of the present disclosure.

At present, the functions of the video editing template provided for the user gradually cannot meet the personalized demands on creation by the user, and therefore, it is a technical problem to be solved at present how to meet the personalized demands on creation by the user.

In order to meet the user's personalized video creation demand, the present disclosure provides a method for generating a video editing template. First, upon receiving a trigger operation for a preset template creation control, a template editing page is displayed. Then, upon receiving an addition operation for the storyboard scenes and/or shooting indication information on the template editing page, a set of storyboard descriptions is generated. The set of storyboard descriptions comprises at least one storyboard scene with a sequential relation, each storyboard scene being provided with shooting indication information for indicating a shooting manner and/or features of shot content of the storyboard scene. Further, based on the set of storyboard descriptions, a target video editing template is generated for generating a target result video. Therefore, an embodiment of the present disclosure provides a function of creating a video editing template for a user, so that the user can create a video editing template meeting the personalized creation demand of the user, thereby improving the user's video creation experience.

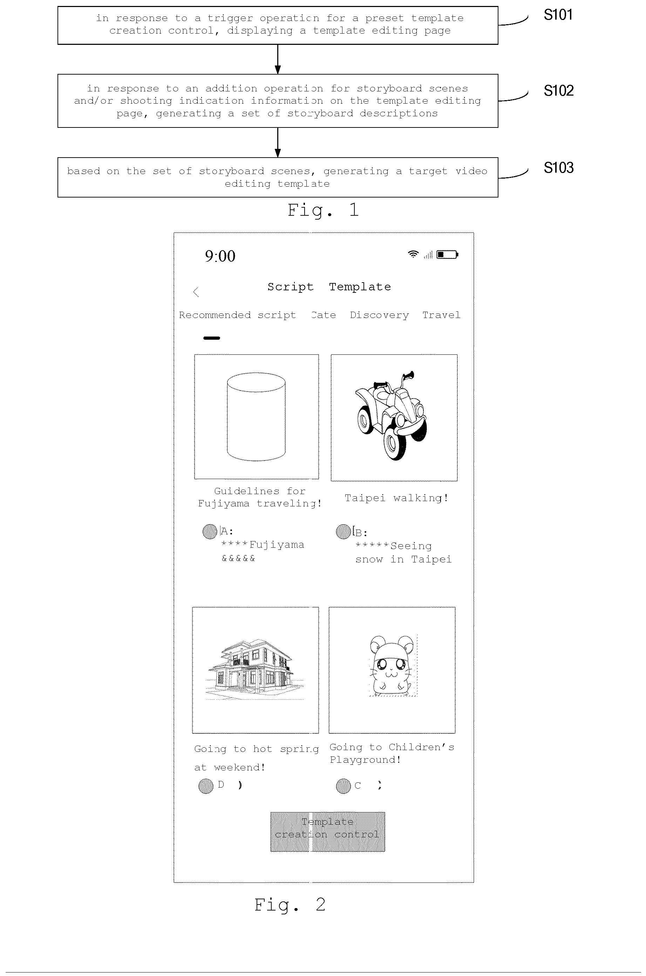

On this basis, an embodiment of the present disclosure provides a method for generating a video editing template. Referring to Fig. 1 that is a flowchart of a method for generating a video editing template provided by an embodiment of the present disclosure, the method comprising:
S101: in response to a trigger operation for a preset template creation control, displaying a template editing page.

In an embodiment of the present disclosure, the preset template creation control may be a control preset on a video editing template display page. As shown in Fig. 2, which is a schematic diagram of a video editing template display page provided in an embodiment of the present disclosure. The video editing template may also be referred to as a video authoring script, or a script for short. In the process of browsing the video editing template, a user can trigger a jump from the current page to a template editing page by clicking the template creation control on the video editing template display page to display the template editing page.

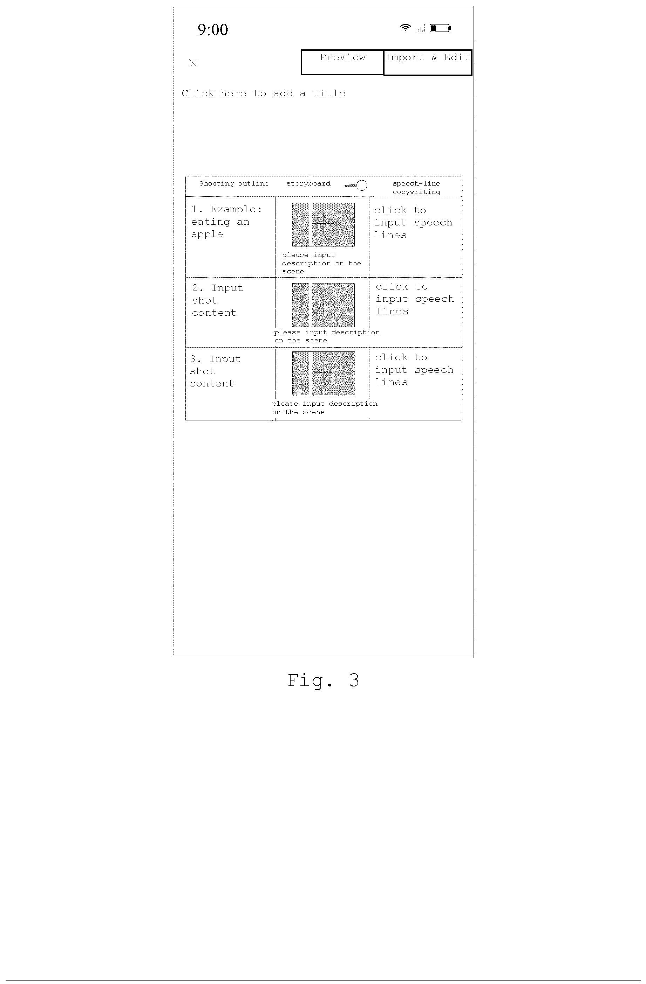

Referring to Fig. 3 that is a schematic diagram of a template editing page provided by an embodiment of the present disclosure, where an empty script is displayed on the video editing page, it may be a default that the video editing template comprises "a shooting outline", "storyboard scenes" and "a speech-line copywriting", and a user may complete creation of the script by adding content in the empty script. It should be noted that the video editing page in an embodiment of the present disclosure may also be in other styles, which is not limited in the embodiments of the present disclosure.

S102: in response to an addition operation for the storyboard scenes and/or shooting indication information on the template editing page, generating a set of storyboard description.

Wherein the set of storyboard descriptions comprises at least one storyboard scene with a sequential relation, the at least one storyboard scene being respectively provided with shooting indication information, and the shooting indication information being used for indicating the shooting manner and/or features of shot content of the storyboard scene.

In an embodiment of the present disclosure, storyboard scenes, shooting indication information, and the like may be added on the template editing page, so as to generate a set of storyboard descriptions.

In an alternative embodiment, the shooting indication information has a one-to-one corresponding relation with the storyboard scenes, and the shooting indication information of each storyboard scene is used for indicating the shooting manner, the features of shot content, and the like of the storyboard scene. Wherein the shooting manner may comprise a mirror operation manner, which may specifically comprise handheld self-shooting, leftright panning, follow-shooting and the like; the shooting indication information may also describe features of shot content for the storyboard scenes; for example, the shooting indication information may comprise "ordering", describing a material for the storyboard scene corresponding to the shooting indication information is "ordering" related content.

In an embodiment of the present disclosure, a material uploading control is provided on the template editing page. As shown in Fig. 3, a user can control a display state of a material uploading window corresponding to the storyboard scene by controlling the material uploading control.

In an alternative embodiment, in response to a start trigger operation for a material uploading control on a template editing page, a material uploading window corresponding to a storyboard scene in a set of storyboard descriptions is displayed on the template editing page. Wherein the material uploading window is used for setting an initial video material for the corresponding storyboard scene. As shown in Fig. 3, the material uploading control is in an initiated state, and at this time, the material uploading window corresponding to the storyboard scene is in a displaying state, and the user can select an initial video material for the corresponding storyboard scene by clicking the material uploading window.

In another alternative embodiment, in order to make the display effect of the template editing page more concise, the user may control the material uploading window on the template editing page to be in a hidden state by closing the material uploading control.

Specifically, in response to a close trigger operation for the material uploading control, the material uploading window displayed on the template editing page is hidden.

S103: generating a target video editing template based on the set of storyboard descriptions.

The target video editing template is used for generating a target result video, the target result video comprising at least one initial video material that is respectively set for at least one storyboard scene in the target video editing template.

In an embodiment of the present disclosure, after the set of storyboard descriptions is generated, a target video editing template may be generated based on storyboard scenes in the set of storyboard descriptions and shooting indication information of the storyboard scenes.

In an alternative embodiment, the target video editing template may be published so that other users can perform video authoring based on the target video editing template.

In another alternative embodiment, after generating the target video editing template, a target result video may be generated based on the target video editing template. Specifically, based on the target video editing template, the user may upload an initial video material for the corresponding storyboard scene by clicking the material uploading window corresponding to each storyboard scene. The initial video material may derive from a user album page, or from a video shooting page.

In the method for generating a video editing template provided by an embodiment of the disclosure, first, upon receiving a trigger operation for a preset template creation control, a template editing page is displayed. Then, upon receiving an addition operation for the storyboard scenes and/or the shooting indication information on the template editing page, a set of storyboard descriptions is generated. Wherein the set of storyboard descriptions comprises at least one storyboard scene with a sequential relation, each storyboard scene being provided with shooting indication information that is used for indicating the shooting manner and/or features of shot content of the storyboard scene. Further, based on the set of storyboard descriptions, a target video editing template is generated, which is used for generating a target result video. Therefore, an embodiment of the present disclosure provides a function of creating a video editing template for a user, so that the user can create a video editing template meeting the personalized creation demand of the user, thereby improving the video creation experience of the user.

Based on the contents of the above-mentioned embodiments, after the set of storyboard descriptions is generated, edition may be performed for the storyboard scenes and the shooting indication information in the set of storyboard descriptions so as to update the set of storyboard descriptions and generate a target video editing template based on the updated set of storyboard descriptions.

In an alternative embodiment, a modification operation, a deletion operation, a sequence adjustment operation, an addition operation and the like may be triggered for the storyboard scenes and/or the shooting indication information in the set of storyboard descriptions.

In addition, in order to enrich video creation indication information provided by the video editing template for the user, in an embodiment of the present disclosure, video clip description information can be added to the storyboard scenes in the set of storyboard descriptions to indicate shooting content outlines of the corresponding storyboard scenes. For example, the video clip description information may be "eating an apple", and the shooting indication information of the corresponding storyboard scene may comprise shooting indication information of a plurality of storyboard scenes, such as "close-up of the apple", "expression of the person eating the apple", and "close-up after eating the apple".

Specifically, video clip description information added on the template editing page for at least one storyboard scene in the set of storyboard description is received, and then, based on the storyboard scenes in the set of storyboard description and shooting indicating information as well as the video clip description information of the storyboard scenes, a target video editing template is generated. Wherein the target video editing template provides for the user not only shooting indication information of respective storyboard scenes but also video clip description information, which enriches video creation indication information provided by the video editing template for the user and improves the user's video creation experience.

In an alternative embodiment, for the added video clip description information, secondary editing may also be performed, where the secondary editing may comprise deleting, modifying, order adjusting, and the like, for the added video clip description information.

In addition, an embodiment of the present disclosure may further add a speech-line copywriting to the plurality of storyboard scenes corresponding to the video clip description information, so as to indicate shooting speech of the storyboard scenes corresponding to the video clip description information.

Specifically, the speech-line copywriting added to the video clip description information on the template editing page is received, and then a target video editing template can be generated based on the storyboard scenes in the set of storyboard descriptions and shooting indicating information, video clip description information and the speech-line copywriting for the storyboard scenes.

Wherein the target video editing template provides for the user not only shooting indication information and video clip description information for respective storyboard scenes, but also a speech-line copywriting for video creation, which further enriches video creation indication information provided by the video editing template for the user and improves the user's video creation experience.

For the added speech-line copywriting, secondary editing may also be performed, where the secondary editing may comprise deleting, modifying, order adjusting, and the like, for the added speech-line copywriting.

In addition, in order to enable a user to learn the content of the video editing template as a whole, an embodiment of the present disclosure may further add content directories, where each content directory has a corresponding relationship with at least one piece of video clip description information for describing the stage of the video clip corresponding to the at least one piece of video clip description information in the whole video; for example, the content directory may comprise a prologue, a process, a climax, and a result.

For the added content directory, secondary editing may also be performed, where the secondary editing may comprise deleting, modifying, order adjusting, and the like, for the added content directory.

In the method for generating a video editing template provided by an embodiment of the disclosure, a user may add storyboard scenes, and shooting indication information, video clip description information, a speech-line copywriting and a content directory as well as other information of the storyboard scenes on a template editing page based on personalized video creation demands of the user, which instructs the user to perform video creation and improves the user experience.

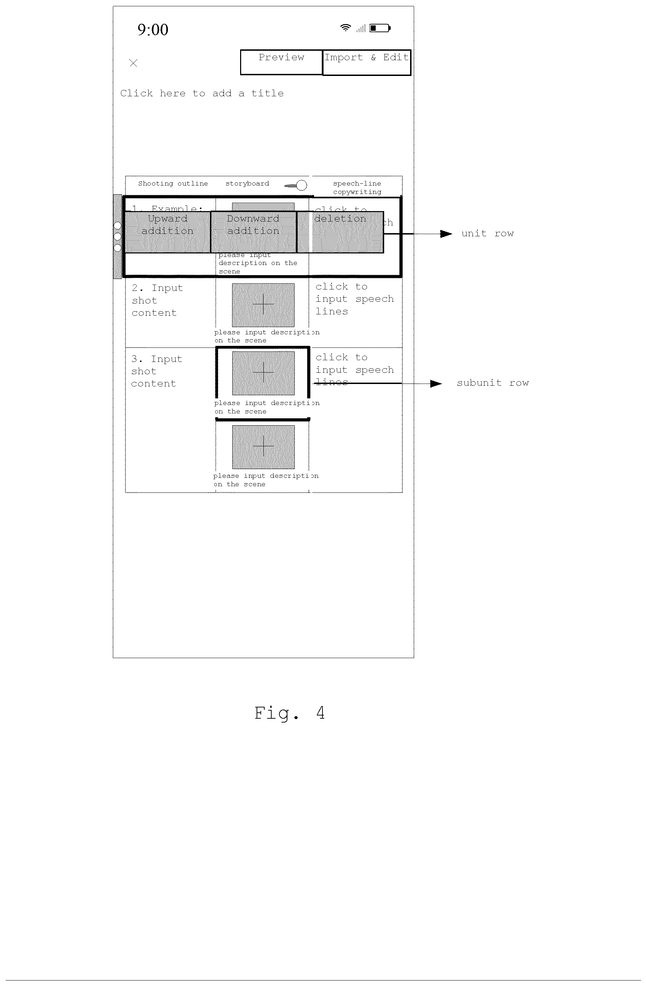

Based on the content of the embodiments, the embodiments of the present disclosure provide a specific implementation manner of a method for generating a video editing template. Wherein the target video editing template is generated based on a table; as shown in Fig. 4, which is a schematic diagram of another template editing page provided by an embodiment of the present disclosure, a first table is displayed on the template editing page, where the first table by default comprises three columns of "shooting outline", "storyboard" and "speech-line copywriting", each unit row in the first table having a corresponding relationship with video clip description information, and each unit row storing one piece of video clip description information, one speech-line copywriting, and one or more storyboard scenes and shooting indication information.

In a practical application, a user may add storyboard scenes and shooting indication information, video clip description information, a speech-line copywriting and the like of storyboard scenes on the template editing page based on basic operations of a table. Further, the user may perform secondary editing on the content that has been added on the template editing page based on the basic operations of the table.

According to the invention, when a preset selection operation for any piece of video clip description information in a first table on a template editing page is received, an editing floating window is displayed for a unit row where the video clip description information is located. Wherein deletion control and an addition control are displayed on the editing floating window, wherein the addition control may comprise an upward addition control and a downward addition control.

As shown in Fig. 4, when a preset selection operation is triggered for the video clip description information in the first unit row in the first table, the unit row is in a selected state, an editing floating window is displayed at the position of the unit row, and the unit row can be edited based on the editing floating window.

Specifically, in response to a preset selection operation for the first video clip description information in the first table, an editing floating window is displayed for a unit row corresponding to the first video clip description information; wherein the editing floating window comprises a deletion option. In response to a trigger operation for the deletion option on the editing floating window, the unit row and the video clip description information and the shooting indication information of storyboard scenes stored in the unit line are deleted. If a speech-line copywriting is stored in the unit row, the speech-line copywriting is deleted. It can be understood that after the delete option is triggered for the first unit row in Fig. 4, the template editing page is updated from 3 unit rows to 2 unit rows, that is, the first unit row is deleted.

In response to a trigger operation for an addition option on the editing floating window, at least one unit row is added to the first table based on a position where the unit row is located. For example, when an option of upward addition clicked by the user is received, one unit row is added above the currently selected unit row, and in the added unit row, the user may add a storyboard scene and shooting indication information, video clip description information, a speech-line copywriting, and the like of the storyboard scene.

Each unit row in the first table in an embodiment of the present disclosure may comprise one or more subunit rows, each subunit row having a corresponding relationship with the storyboard scene, and each subunit row being configured to store shooting indication information, a material uploading window, and the like of the corresponding storyboard scene. Wherein the material uploading window is used for setting an initial video material for the corresponding storyboard scene.

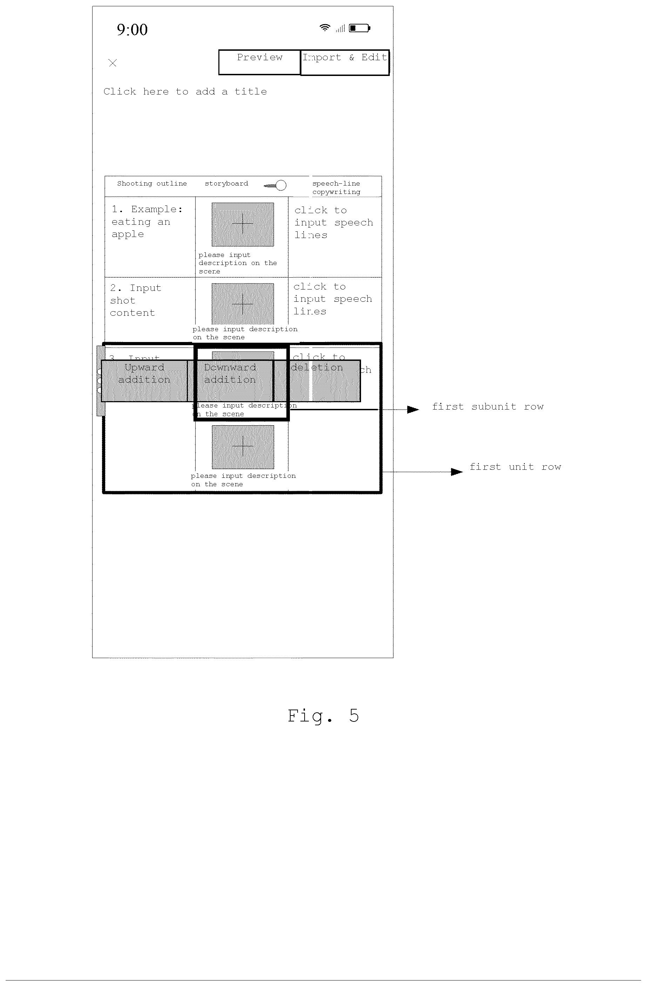

Fig. 5 is a schematic diagram of another template editing page provided in an embodiment of the present disclosure, where a first unit row comprises two subunit rows, where a first storyboard scene corresponding to the first subunit row is in a selected state, and at this time, an editing floating window is displayed for the first subunit row corresponding to the first storyboard scene.

Specifically, when a preset selection operation for a first storyboard scene in the first table is received, an editing floating window is displayed for a subunit row corresponding to the first storyboard scene. When a trigger operation for a deletion option on the editing floating window is received, the subunit row and the shooting indication information and/or the material uploading window of the storyboard scenes stored in the subunit row are deleted. For example, after the deletion option is triggered for the first subunit row shown in Fig. 5, the first subunit row and the content stored therein are deleted, where the first unit row comprises only one subunit row.

In addition, when a trigger operation for an addition option on the editing floating window is received, a new subunit row is added at the position of the corresponding subunit row, and a user can add shooting indication information of storyboard scenes in the subunit row. For example, after a downward addition option is triggered for the first subunit row shown in Fig. 5, one subunit row is added below the first subunit row to store the shooting indication information of the storyboard scenes added by the user, where the first unit row comprises three subunit rows.

Specifically, in response to a trigger operation for an addition option on the editing floating window, at least one subunit row is added in the unit row to which the corresponding subunit row belongs based on the position of the corresponding subunit row.

In an embodiment of the present disclosure, the user can create a video editing template based on basic operations of the table; the operation is simple and convenient, thereby improving the user's experience of creating the video editing template and experience of subsequent video creation.

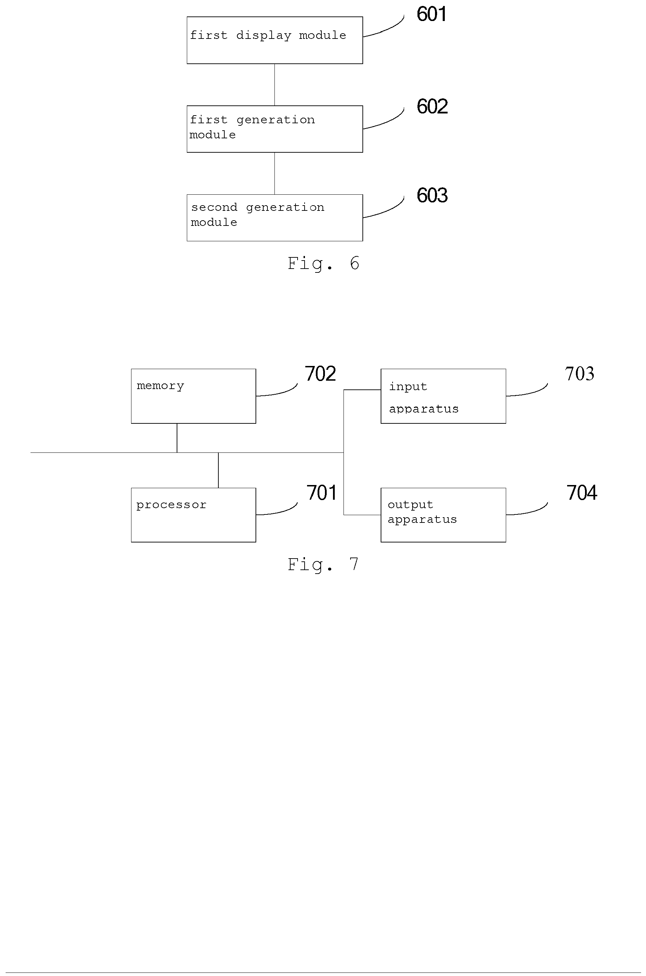

Based on the same inventive concept as the above method embodiment, the present disclosure further provides an apparatus for generating a video editing template; with reference to Fig. 6, which is a schematic structural diagram showing an apparatus for generating a video editing template provided in an embodiment of the present disclosure, the apparatus comprising:
a first display module 601, configured to display a template editing page in response to a trigger operation for a preset template creation control;
a first generation module 602, used to generate a set of storyboard descriptions in response to an addition operation for a storyboard scene and/or shooting indication information on the template editing page; wherein the set of storyboard descriptions comprises at least one storyboard scene with a sequential relation, the at least one storyboard scene being respectively provided with shooting indication information for indicating a shooting manner and/or features of shot content of the storyboard scenes; and
a second generation module 603, used to generate a target video editing template based on the set of storyboard descriptions; wherein the target video editing template is used for generating a target result video that comprises at least one initial video material respectively set for at least one storyboard scene in the target video editing template.

In an alternative embodiment, the template editing page comprises a material uploading control, and the apparatus further comprises:
a second display module, used to display, in response to a start trigger operation for the material uploading control, a material uploading window corresponding to the storyboard scenes in the set of storyboard descriptions on the template editing page; wherein the material uploading window is used for setting an initial video material for storyboard scenes.

In an alternative embodiment, the apparatus further comprises:
a hiding module, used to hide, in response to a close trigger operation for the material uploading control, a material uploading window displayed on the template editing page.

In an alternative embodiment, the apparatus further comprises:
an updating module, used to update, in response to an editing operation for the storyboard scenes and/or the shooting indication information in the set of storyboard descriptions, the set of storyboard descriptions; wherein the editing operation comprises a modification operation, a deletion operation and/or a sequence adjustment operation.

In an alternative embodiment, the apparatus further comprises:
a first receiving module, used to receive video clip description information added on the template editing page for at least one storyboard scene in the set of storyboard descriptions; wherein the video clip description information is used for indicating a shooting content outline of the at least one storyboard scene;
correspondingly, the second generation module is specifically used to:
   generate a target video editing template based on the set of storyboard descriptions and the video clip description information.

In an alternative embodiment, the apparatus further comprises:
a second receiving module, used to receive a speech-line copywriting added on the template editing page for video clip description information; wherein the speech-line copywriting is used for indicating shooting speech lines of the storyboard scenes corresponding to the video clip description information;
correspondingly, the second generation module is specifically used to:
   generate a target video editing template based on the set of storyboard descriptions, the video clip description information and the speech-line copywriting.

In an alternative embodiment, the target video editing template is generated based on a first table, unit rows in the first table having a corresponding relationship with video clip description information, and the unit row being used for storing the video clip description information and shooting indication information of at least one storyboard scene corresponding to the video clip description information; the apparatus further comprises:
a third display module, used to display, in response to a preset selection operation for first video clip description information in the first table, an editing floating window for a unit row corresponding to the first video clip description information; wherein the editing floating window comprises a deletion option; and
a first deleting module, used to delete the unit row and video clip description information and shooting indication information of storyboard scenes stored in the unit row in response to a trigger operation for the deletion option on the editing floating window.

In an alternative embodiment, the editing floating window further comprises an addition option, and the apparatus further comprises:
a first adding module, used to add at least one unit row in the first table based on a position of the unit row in response to a trigger operation for the addition option on the edit floating window.

In an alternative embodiment, the unit rows in the first table comprise at least one subunit row, where the subunit row has a corresponding relationship with a storyboard scene, the subunit row is used to store shooting indication information and/or a material uploading window of the storyboard scenes, and the material uploading window is used to set an initial video material for the storyboard scenes; the apparatus further comprises:
a fourth display module, used to display, in response to a preset selection operation for a first storyboard scene in the first table, the editing floating window for a subunit row corresponding to the first storyboard scene; and
a second deleting module, used to delete the subunit row and the shooting indication information and/or the material uploading window of the storyboard scenes stored in the subunit line in response to a trigger operation for the deletion option on the editing floating window.

In an alternative embodiment, the apparatus further comprises:
a second adding module, used to add, in response to a trigger operation for an addition option on the editing floating window, at least one subunit row in the unit row to which the subunit row belongs based on a position of the subunit row.

In an alternative embodiment, the apparatus further comprises:
a releasing module, used to release the target video editing template.

In the apparatus for generating a video editing template provided in an embodiment of the present disclosure, first, when a trigger operation for a preset template creation control is received, a template editing page is displayed. Then, upon receiving an addition operation for the storyboard scenes and/or the shooting indication information on the template editing page, a set of storyboard descriptions is generated. Wherein the set of storyboard descriptions comprises at least one storyboard scene with a sequential relation, each storyboard scene being provided with shooting indication information, and the shooting indication information being used for indicating the shooting manner and/or features of shot content of the storyboard scene. Further, a target video editing template is generated based on the set of storyboard descriptions for generating a target result video. Therefore, the embodiments of the present disclosure provide a function of creating a video editing template for a user, so that the user can create a video editing template meeting the user's personalized creation demands, and thus, the video creation experience of the user is improved.

In addition to the method and the apparatus, an embodiment of the present disclosure further provides a computer-readable storage medium having instructions stored thereon, which, when executed on a terminal device, cause the terminal device to implement a method for generating a video editing template according to an embodiment of the present disclosure.

An embodiment of the present disclosure further provides a computer program product, which comprises computer programs/instructions, which, when executed by a processor, implements a method for generating a video editing template according to an embodiment of the present disclosure.

In addition, an embodiment of the present disclosure further provides a device for generating a video editing template, and as shown in Fig. 7, the device may comprise:
a processor 701, a memory 702, an input apparatus 703, and an output apparatus 704. The number of processors 701 in the device for generating the video editing template may be one or more, and one processor is taken as an example in Fig. 7. In some embodiments of the present disclosure, the processor 701, the memory 702, the input apparatus 703 and the output apparatus 704 may be connected via a bus or other means, wherein a bus connection is taken as an example in Fig. 7.

The memory 702 may be used to store software programs and modules, and the processor 701 executes various functional applications and data processing of the device for generating a video editing template by operating the software programs and modules stored in the memory 702. The memory 702 may mainly comprise a program storage area and a data storage area, wherein the program storage area may store an operating system, an application required for at least one function, and the like. Further, the memory 702 may comprise a cache, and may also comprise a non-volatile memory, such as at least one magnetic disk storage device, flash memory device, or other volatile solid-state storage devices. The input apparatus 703 may be used to receive input numeric or character information and to generate signal inputs relating to user settings and function controls of the device for generating the video editing template.

Specifically, in this embodiment, the processor 701 loads executable files corresponding to processes of one or more applications into the memory 702 according to the following instructions, and the processor 701 executes the applications stored in the memory 702, thereby implementing various functions of the device for generating a video editing template.

It is to be noted that, in this document, relational terms such as "first" and "second" are used solely to distinguish one entity or action from another entity or action without necessarily requiring or implying any actual relationship or order between such entities or actions. Also, the terms "comprising", "including" or any other variations thereof, are intended to cover a non-exclusive inclusion, such that a process, method, article, or device that comprises a list of elements does not comprise only those elements but may comprise other elements not expressly listed or inherent to such process, method, article, or apparatus. Without further limitation, an element defined by the phrase "comprising a/an ..." does not exclude the presence of other identical elements in the process, method, article, or apparatus that comprises the element.

## Claims

1. A method for generating a video editing template, the method comprising:
displaying a template editing page in response to a trigger operation for a preset template creation control;
generating a set of storyboard descriptions in response to an addition operation for at least one of storyboard scenes or shooting indication information on the template editing page; wherein the set of storyboard descriptions comprises at least one storyboard scene with a sequential relation, and the at least one storyboard scene comprises respective shooting indication information used for indicating at least one of a shooting manner or features of shot content of the storyboard scene; and
receiving video clip description information added on the template editing page for at least one storyboard scene in the set of storyboard descriptions; wherein the video clip description information is used for indicating a shooting content outline of the at least one storyboard scene;
generating a target video editing template based on the set of storyboard descriptions and the video clip description information; wherein the target video editing template is configured to generate a target result video, wherein the target result video comprises at least one initial video material, and the at least one initial video material is respectively set for at least one storyboard scene in the target video editing template,
wherein the target video editing template is generated based on a first table, a unit row in the first table having a corresponding relationship with the video clip description information, the unit row being configured to store the video clip description information and shooting indication information of at least one storyboard scene corresponding to the video clip description information; the method being **characterized by**
further comprising:
displaying an editing floating window for a unit row corresponding to first video clip description information in response to a preset selection operation for the first video clip description information in the first table; wherein the editing floating window floats above the unit row corresponding to first video clip description information and comprises a deletion option and an addition option;
deleting the unit row and video clip description information and shooting indication information of the storyboard scene stored in the unit row in response to a trigger operation for the deletion option on the editing floating window; and
adding at least one unit row in the first table based on a position at which the unit row is located in response to a trigger operation for the addition option on the editing floating window.

2. The method according to claim 1, wherein the template editing page comprises a material uploading control thereon, and the method further comprises, after the generating a set of storyboard descriptions in response to an add operation on the template editing page for at least one of storyboard scenes or shooting indication information:
displaying a material uploading window corresponding to the storyboard scenes in the set of storyboard descriptions on the template editing page in response to a start trigger operation for the material uploading control; wherein the material uploading window is configured to set initial video materials for the storyboard scenes.

3. The method according to claim 2, wherein the method further comprises, after the displaying a material uploading window corresponding to the storyboard scenes in the set of storyboard descriptions on the template editing page in response to a start trigger operation for the material uploading control:
hiding the material uploading window displayed on the template editing page in response to a close trigger operation for the material uploading control.

4. The method according to any one of claims 1-3, wherein prior to the generating a target video editing template based on the set of storyboard descriptions, the method further comprises:
updating the set of storyboard descriptions in response to an editing operation for at least one of storyboard scenes in the set of storyboard descriptions or shooting indication information; wherein the editing operation comprises at least one of a modification operation, a deletion operation or a sequence adjustment operation.

5. The method according to claim 1, wherein prior to the generating the target video editing template based on the set of storyboard descriptions and the video clip description information, the method further comprises:
receiving a speech-line added on the template editing page for the video clip description information; wherein the speech-line is used for indicating shooting speech lines of the storyboard scenes corresponding to the video clip description information;
correspondingly, the generating a target video editing template based on the set of storyboard descriptions and the video clip description information comprises:
generating a target video editing template based on the set of storyboard descriptions, the video clip description information and the speech-line.

6. The method according to any one of claims 1-5, wherein the unit row in the first table comprises at least one subunit row, the subunit row having a corresponding relationship with a storyboard scene, the subunit row being configured to store at least one of shooting indication information of the storyboard scene or a material uploading window configured to set initial video materials for the storyboard scene; the method further comprises:
displaying the editing floating window for a subunit row corresponding to a first storyboard scene in response to a preset selection operation for the first storyboard scene in the first table; and
deleting the subunit row and at least one of the shooting indication information of the storyboard scene or the material uploading window stored in the subunit row in response to a trigger operation for a deletion option on the editing floating window.

7. The method according to claim 6, wherein the method further comprises, after the displaying the editing floating window for a subunit row corresponding to a first storyboard scene in response to a preset selection operation for the first storyboard scene in the first table:
adding at least one subunit row in the unit row to which the subunit row belongs based on a position of the subunit row in response to a trigger operation for an addition option on the editing floating window.

8. The method according to any one of claims 1-7, wherein the method further comprises, after the generating a target video editing template based on the set of storyboard descriptions:
releasing the target video editing template.

9. An apparatus for generating a video editing template, the apparatus comprising:
a first display module, configured to display a template editing page in response to a trigger operation for a preset template creation control;
a first generation module, configured to generate a set of storyboard descriptions in response to an addition operation for at least one of a storyboard scene or shooting indication information on the template editing page; wherein the set of storyboard descriptions comprises at least one storyboard scene with a sequential relation, the at least one storyboard scene being respectively provided with shooting indication information used for indicating at least one of a shooting manner or features of shot content of the storyboard scene; and
a first receiving module, configured to receive video clip description information added on the template editing page for at least one storyboard scene in the set of storyboard descriptions; wherein the video clip description information is used for indicating a shooting content outline of the at least one storyboard scene;
a second generation module, configured to generate a target video editing template based on the set of storyboard descriptions and the video clip description information; wherein the target video editing template is configured to generate a target result video, the target result video comprising at least one initial video material that is respectively set for at least one storyboard scene in the target video editing template,
wherein the target video editing template is generated based on a first table, a unit row in the first table having a corresponding relationship with video clip description information, and the unit row being configured to store the video clip description information and shooting indication information of at least one storyboard scene corresponding to the video clip description information; the apparatus being **characterized in that**, it further comprises:
a third display module, configured to display, in response to a preset selection operation for first video clip description information in the first table, an editing floating window for a unit row corresponding to the first video clip description information; wherein the editing floating window floats above the unit row corresponding to first video clip description information and comprises a deletion option and an addition option;
a first deleting module, configured to delete the unit row and video clip description information and shooting indication information of the storyboard scene stored in the unit row in response to a trigger operation for the deletion option on the editing floating window; and
a first adding module, configured to add at least one unit row in the first table based on a position at which the unit row is located in response to a trigger operation for the addition option on the edit floating window.

10. A computer-readable storage medium having stored thereon instructions which, when executed on a terminal device, cause the terminal device to carry out the method of any one of claims 1-8.

11. A computer program product, comprising computer programs/instructions which, when executed by a processor, implement the method of any one of claims 1-8.

## Patentansprüche

1. Verfahren zum Erzeugen einer Videobearbeitungsvorlage, wobei das Verfahren Folgendes umfasst:
Anzeigen einer Vorlagenbearbeitungsseite als Reaktion auf eine Auslöseoperation für ein Steuerelement zur Erstellung voreingestellter Vorlagen;
Erzeugen eines Satzes von Storyboard-Beschreibungen als Reaktion auf eine Hinzufügungsoperation für mindestens eines von einer Storyboard-Szene oder Drehangabeinformationen auf der Vorlagenbearbeitungsseite; wobei der Satz von Storyboard-Beschreibungen mindestens eine Storyboard-Szene mit einer sequenziellen Beziehung umfasst und die mindestens eine Storyboard-Szene jeweilige Drehangabeinformationen enthält, die zum Angeben mindestens eines von einer Drehart oder Merkmalen eines Einstellungsinhalts der Storyboard-Szene verwendet werden; und
Empfangen von Videoclip-Beschreibungsinformationen, die auf der Vorlagenbearbeitungsseite für mindestens eine Storyboard-Szene im Satz von Storyboard-Beschreibungen hinzugefügt wurden; wobei die Videoclip-Beschreibungsinformationen zum Angeben einer Drehinhaltsübersicht der mindestens einen Storyboard-Szene verwendet werden;
Erzeugen einer Zielvideo-Bearbeitungsvorlage basierend auf dem Satz von Storyboard-Beschreibungen und den Videoclip-Beschreibungsinformationen; wobei die Zielvideo-Bearbeitungsvorlage so konfiguriert ist, dass sie ein Zielergebnisvideo erzeugt, wobei das Zielergebnisvideo mindestens ein Ausgangsvideomaterial umfasst und das mindestens eine Ausgangsvideomaterial jeweils für mindestens eine Storyboard-Szene in der Zielvideo-Bearbeitungsvorlage festgelegt ist,
wobei die Ziel-Videobearbeitungsvorlage basierend auf einer ersten Tabelle erzeugt wird, wobei eine Einheitszeile in der ersten Tabelle eine entsprechende Beziehung zu den Videoclip-Beschreibungsinformationen aufweist, wobei die Einheitszeile so konfiguriert ist, dass sie die Videoclip-Beschreibungsinformationen und die Aufnahmeinformationen mindestens einer Storyboard-Szene speichert, die den Videoclip-Beschreibungsinformationen entspricht; wobei das Verfahren **dadurch gekennzeichnet ist, dass** es weiter Folgendes umfasst:
Anzeigen eines schwebenden Bearbeitungsfensters für eine Einheitszeile, die den ersten Videoclip-Beschreibungsinformationen entspricht, als Reaktion auf eine voreingestellte Auswahloperation für die ersten Videoclip-Beschreibungsinformationen in der ersten Tabelle; wobei das schwebende Bearbeitungsfenster über der Einheitszeile, die den ersten Videoclip-Beschreibungsinformationen entspricht, schwebt und eine Löschoption und eine Hinzufügungsoption umfasst;
Löschen der Zeilen- und Videoclip-Beschreibungsinformationen und der Drehangabeinformationen der Storyboard-Szene, die in der Einheitszeilen- und Videoclip-Beschreibung gespeichert sind, als Reaktion auf eine Auslöseoperation für die Löschoption im schwebenden Bearbeitungsfenster; und
Hinzufügen von mindestens einer Einheitszeile in der ersten Tabelle basierend auf der Position, an der sich die Einheitszeile befindet, als Reaktion auf eine Auslöseoperation für die Hinzufügungsoption im Bearbeitungsfenster.

2. Verfahren nach Anspruch 1, wobei die Vorlagenbearbeitungsseite auf derselben ein Steuerelement zum Hochladen von Material umfasst, und das Verfahren weiter, nach dem Erzeugen eines Satzes von Storyboard-Beschreibungen als Reaktion auf eine Hinzufügungsoperation auf der Vorlagenbearbeitungsseite für mindestens eines von Storyboard-Szenen oder Drehangabeinformationen, Folgendes umfasst:
Anzeigen eines Fensters zum Hochladen von Material, das den Storyboard-Szenen in dem Satz von Storyboard-Beschreibungen auf der Vorlagenbearbeitungsseite entspricht, als Reaktion auf eine Startauslöseoperation für das Steuerelement zum Hochladen von Material; wobei das Fenster zum Hochladen von Material so konfiguriert ist, dass es Ausgangsvideomaterialien für die Storyboard-Szenen festlegt.

3. Verfahren nach Anspruch 2, wobei das Verfahren weiter, nach dem Anzeigen eines Fensters zum Hochladen von Material, das den Storyboard-Szenen in der Menge der Storyboard-Beschreibungen auf der Vorlagenbearbeitungsseite entspricht, als Reaktion auf eine Startauslöseoperation für das Steuerelement zum Hochladen von Material, Folgendes umfasst:
Ausblenden des Fensters zum Hochladen von Materialien, das auf der Vorlagenbearbeitungsseite angezeigt wird, als Reaktion auf eine Schließauslöseoperation für das Steuerelement zum Hochladen von Materialien.

4. Verfahren nach einem der Ansprüche 1 bis 3, wobei vor dem Erzeugen einer Ziel-Videobearbeitungsvorlage basierend auf den Storyboard-Beschreibungen das Verfahren weiter Folgendes umfasst:
Aktualisieren des Satzes von Storyboard-Beschreibungen als Reaktion auf eine Bearbeitungsoperation für mindestens eines von Storyboard-Szenen in dem Satz von Storyboard-Beschreibungen oder Drehanweisungen; wobei die Bearbeitungsoperation mindestens eines von einer Änderungsoperation, einer Löschoperation oder einer Sequenzanpassungsoperation umfasst.

5. Verfahren nach Anspruch 1, wobei vor dem Erzeugen der Ziel-Videobearbeitungsvorlage basierend auf den Storyboard-Beschreibungen und den Videoclip-Beschreibungsinformationen das Verfahren weiter Folgendes umfasst:
Empfangen einer auf der Vorlagenbearbeitungsseite hinzugefügten Sprechzeile für die Videoclip-Beschreibungsinformationen; wobei die Sprechzeile dazu dient, Drehsprechzeilen der Storyboard-Szenen anzugeben, die den Videoclip-Beschreibungsinformationen entsprechen;
dementsprechend umfasst das Erzeugen einer Ziel-Videobearbeitungsvorlage basierend auf dem Satz von Storyboard-Beschreibungen und den Videoclip-Beschreibungsinformationen Folgendes:
Erzeugen einer Ziel-Videobearbeitungsvorlage basierend auf den Storyboard-Beschreibungen, den Videoclip-Beschreibungsinformationen und der Sprechzeile.

6. Verfahren nach einem der Ansprüche 1 bis 5, wobei die Einheitszeile in der ersten Tabelle mindestens eine Untereinheitszeile umfasst, wobei die Untereinheitszeile eine entsprechende Beziehung zu einer Storyboard-Szene aufweist, wobei die Untereinheitszeile so konfiguriert ist, dass sie mindestens eines von Drehangabeinformationen der Storyboard-Szene oder einem Fenster zum Hochladen von Material speichert, das zum Festlegen von Ausgangsvideomaterial für die Storyboard-Szene konfiguriert ist; wobei das Verfahren weiter Folgendes umfasst:
Anzeigen des schwebenden Bearbeitungsfensters für eine Untereinheitszeile, die einer ersten Storyboard-Szene entspricht, als Reaktion auf eine voreingestellte Auswahloperation für die erste Storyboard-Szene in der ersten Tabelle; und
Löschen der Untereinheitszeile und mindestens eines von den Aufnahmeinformationen der Storyboard-Szene oder dem Fenster zum Hochladen von Material, die in der Untereinheitszeile gespeichert sind, als Reaktion auf eine Auslöseoperation für eine Löschoption im schwebenden Bearbeitungsfenster.

7. Verfahren nach Anspruch 6, wobei das Verfahren weiter, nach dem Anzeigen des schwebenden Bearbeitungsfensters für eine Untereinheitszeile, die einer ersten Storyboard-Szene entspricht, als Reaktion auf eine voreingestellte Auswahloperation für die erste Storyboard-Szene in der ersten Tabelle, Folgendes umfasst:
Hinzufügen mindestens einer Untereinheitszeile in der Einheitszeile, zu der die Untereinheitszeile gehört, basierend auf einer Position der Untereinheitszeile, als Reaktion auf eine Auslöseoperation für eine Hinzufügungsoption im schwebenden Bearbeitungsfenster.

8. Verfahren nach einem der Ansprüche 1 bis 7, wobei das Verfahren weiter, nach dem Erzeugen einer Ziel-Videobearbeitungsvorlage auf der Grundlage des Satzes von Storyboard-Beschreibungen, Folgendes umfasst:
Freigeben der Ziel-Videobearbeitungsvorlage.

9. Einrichtung zum Erzeugen einer Videobearbeitungsvorlage, wobei die Vorrichtung Folgendes umfasst:
ein erstes Anzeigemodul, das so konfiguriert ist, dass es als Reaktion auf eine Auslöseoperation für ein voreingestelltes Steuerelement zur Vorlagenerstellung eine Vorlagenbearbeitungsseite anzeigt;
ein Modul der ersten Generation, das so konfiguriert ist, dass es als Reaktion auf eine Hinzufügungsoperation für mindestens eines von einer Storyboard-Szene oder Drehangabeinformationen auf der Vorlagenbearbeitungsseite einen Satz von Storyboard-Beschreibungen erzeugt; wobei der Satz von Storyboard-Beschreibungen mindestens eine Storyboard-Szene mit einer sequenziellen Beziehung umfasst, wobei die mindestens eine Storyboard-Szene jeweils mit Drehangabeinformationen versehen ist, die zum Anzeigen von mindestens einem von einer Drehweise oder Merkmalen eines Einstellungsinhalts der Storyboard-Szene verwendet werden; und
ein erstes Empfangsmodul, das so konfiguriert ist, dass es Videoclip-Beschreibungsinformationen empfängt, die auf der Vorlagenbearbeitungsseite für mindestens eine Storyboard-Szene im Satz von Storyboard-Beschreibungen hinzugefügt wurden; wobei die Videoclip-Beschreibungsinformationen zum Anzeigen einer Drehinhaltsübersicht der mindestens einen Storyboard-Szene verwendet werden;
ein Modul der zweiten Generation, das so konfiguriert ist, dass es eine Zielvideo-Bearbeitungsvorlage basierend auf dem Satz von Storyboard-Beschreibungen und den Videoclip-Beschreibungsinformationen erzeugt; wobei die Zielvideo-Bearbeitungsvorlage so konfiguriert ist, dass sie ein Zielergebnisvideo erzeugt, wobei das Zielergebnisvideo mindestens ein Ausgangsvideomaterial umfasst, das jeweils für mindestens eine Storyboard-Szene in der Zielvideo-Bearbeitungsvorlage festgelegt ist,
wobei die Ziel-Videobearbeitungsvorlage basierend auf einer ersten Tabelle erzeugt wird, wobei eine Einheitszeile in der ersten Tabelle eine entsprechende Beziehung zu den Videoclip-Beschreibungsinformationen aufweist und die Einheitszeile so konfiguriert ist, dass sie die Videoclip-Beschreibungsinformationen und die Aufnahmeinformationen mindestens einer Storyboard-Szene speichert, die den Videoclip-Beschreibungsinformationen entspricht; wobei die Einrichtung **dadurch gekennzeichnet ist, dass** sie weiter Folgendes umfasst:
ein drittes Anzeigemodul, das so konfiguriert ist, dass es als Reaktion auf eine voreingestellte Auswahloperation für erste Videoclip-Beschreibungsinformationen in der ersten Tabelle ein schwebendes Bearbeitungsfenster für eine Einheitszeile anzeigt, die den ersten Videoclip-Beschreibungsinformationen entspricht; wobei das schwebende Bearbeitungsfenster über der Einheitszeile, die den ersten Videoclip-Beschreibungsinformationen entspricht, schwebt und eine Löschoption und eine Hinzufügungsoption umfasst;
ein erstes Löschmodul, das so konfiguriert ist, dass es die Einheitszeile und die Videoclip-Beschreibungsinformationen und die Aufnahmeinformationen der Storyboard-Szene, die in der Einheitszeile gespeichert sind, als Reaktion auf eine Auslöseoperation für die Löschoption im schwebenden Bearbeitungsfenster löscht; und
ein erstes Hinzufügungsmodul, das so konfiguriert ist, dass es mindestens eine Einheitszeile in der ersten Tabelle hinzufügt, basierend auf einer Position, an der sich die Einheitszeile befindet, als Reaktion auf eine Auslöseoperation für die Hinzufügungsoption im schwebenden Bearbeitungsfenster.

10. Computerlesbares Speichermedium, das auf demselben gespeicherte Anweisungen aufweist, die, wenn sie auf einem Endgerät ausgeführt werden, das Endgerät veranlassen, das Verfahren nach einem der Ansprüche 1-8 durchzuführen.

11. Computerprogrammprodukt, umfassend Computerprogramme/Anweisungen die, wenn sie durch einen Prozessor ausgeführt werden, das Verfahren nach einem der Ansprüche 1-8 implementieren.

## Revendications

1. Procédé de génération d'un modèle d'édition vidéo, le procédé comprenant :
l'affichage d'une page d'édition de modèle en réponse à une opération de déclenchement pour un contrôle de création de modèle prédéfini ;
la génération d'un ensemble de descriptions de storyboard en réponse à une opération d'ajout pour au moins une parmi des scènes de storyboard ou des informations d'indication de tournage sur la page d'édition de modèle ; dans lequel l'ensemble de descriptions de storyboard comprend au moins une scène de storyboard avec une relation séquentielle, et la au moins une scène de storyboard comprend des informations d'indication de tournage respectives utilisées pour indiquer au moins une parmi une manière de filmer ou des caractéristiques de contenu de plan de la scène de storyboard ; et
la réception d'informations de description de clip vidéo ajoutées sur la page d'édition de modèle pour au moins une scène de storyboard dans l'ensemble de descriptions de storyboard ; dans lequel les informations de description de clip vidéo sont utilisées pour indiquer un aperçu de contenu de tournage de la au moins une scène de storyboard ;
la génération d'un modèle d'édition vidéo cible basé sur l'ensemble de descriptions de storyboard et les informations de description de clip vidéo ; dans lequel le modèle d'édition vidéo cible est configuré pour générer une vidéo de résultat cible, dans lequel la vidéo de résultat cible comprend au moins un élément vidéo initial, et le au moins un élément vidéo initial est respectivement défini pour au moins une scène de storyboard dans le modèle d'édition vidéo cible,
dans lequel le modèle d'édition vidéo cible est généré à partir d'un premier tableau, une ligne d'unité du premier tableau présentant une relation de correspondance avec les informations de description de clip vidéo, la ligne d'unité étant configurée pour stocker les informations de description de clip vidéo et les informations d'indication de tournage d'au moins une scène de storyboard correspondant aux informations de description de clip vidéo ; le procédé étant **caractérisé par le fait qu'**il comprend en outre :
l'affichage d'une fenêtre flottante d'édition pour une ligne d'unité correspondant aux informations de description de premier clip vidéo en réponse à une opération de sélection prédéfinie pour les informations de description de premier clip vidéo dans le premier tableau ; dans lequel la fenêtre flottante d'édition flotte au-dessus de la ligne d'unité correspondant aux informations de description de premier clip vidéo et comprend une option de suppression et une option d'ajout ;
la suppression de la ligne d'unité et des informations de description de clip vidéo, ainsi que des informations d'indication de tournage de la scène de storyboard stockées dans la ligne d'unité, en réponse à une opération de déclenchement de l'option de suppression dans la fenêtre flottante d'édition ; et
l'ajout d'au moins une ligne d'unité dans le premier tableau en fonction de la position de la ligne d'unité en réponse à une opération de déclenchement de l'option d'ajout dans la fenêtre flottante d'édition.

2. Procédé selon la revendication 1, dans lequel la page d'édition de modèle comprend une commande de chargement d'élément, et le procédé comprend en outre, après la génération d'un ensemble de descriptions de storyboard en réponse à une opération d'ajout sur la page d'édition de modèle pour au moins une parmi des scènes de storyboard ou des informations d'indication de tournage :
l'affichage d'une fenêtre de chargement d'élément correspondant aux scènes de storyboard dans l'ensemble de descriptions de storyboard sur la page d'édition de modèle en réponse à une opération de déclenchement de démarrage pour la commande de chargement d'élément ; dans lequel la fenêtre de chargement d'élément est configurée pour définir les éléments vidéo initiaux pour les scènes de storyboard.

3. Procédé selon la revendication 2, dans lequel le procédé comprend en outre, après l'affichage d'une fenêtre de chargement d'élément correspondant aux scènes de storyboard dans l'ensemble de descriptions de storyboard sur la page d'édition de modèle en réponse à une opération de déclenchement de démarrage pour la commande de chargement d'élément :
le fait de masquer la fenêtre de chargement d'élément affichée sur la page d'édition de modèle en réponse à une opération de déclenchement de fermeture pour la commande de chargement d'élément.

4. Procédé selon l'une quelconque des revendications 1-3, dans lequel, avant la génération d'un modèle d'édition vidéo cible à partir de l'ensemble de descriptions de storyboard, le procédé comprend en outre :
la mise à jour de l'ensemble de descriptions de storyboard en réponse à une opération d'édition pour au moins une parmi des scènes de storyboard dans l'ensemble de descriptions de storyboard ou des informations d'indication de tournage ; dans lequel l'opération d'édition comprend au moins une parmi une opération de modification, une opération de suppression ou une opération d'ajustement de séquence.

5. Procédé selon la revendication 1, dans lequel, avant la génération du modèle d'édition vidéo cible à partir de l'ensemble de descriptions de storyboard et des informations de description de clip vidéo, le procédé comprend en outre :
la réception d'une ligne de dialogue ajoutée sur la page d'édition de modèle pour les informations de description de clip vidéo ; dans lequel la ligne de dialogue est utilisée pour indiquer les lignes de dialogue de tournage des scènes de storyboard correspondant aux informations de description de clip vidéo ;
en conséquence, la génération d'un modèle d'édition vidéo cible basé sur l'ensemble de descriptions de storyboard et les informations de description de clip vidéo comprend :
la génération d'un modèle d'édition vidéo cible basé sur l'ensemble de descriptions de storyboard, les informations de description de clip vidéo et la ligne de dialogue.

6. Procédé selon l'une quelconque des revendications 1-5, dans lequel la ligne d'unité du premier tableau comprend au moins une ligne de sous-unité, la ligne de sous-unité présentant une relation correspondante avec une scène de storyboard, la ligne de sous-unité étant configurée pour stocker au moins une parmi des informations d'indication de tournage de la scène de storyboard ou une fenêtre de chargement d'élément configurée pour définir des éléments vidéo initiaux de la scène de storyboard ; le procédé comprend en outre :
l'affichage de la fenêtre flottante d'édition pour une ligne de sous-unité correspondant à une première scène de storyboard en réponse à une opération de sélection prédéfinie pour la première scène de storyboard dans le premier tableau ; et
la suppression de la ligne de sous-unité et d'au moins une parmi les informations d'indication de tournage de la scène de storyboard ou la fenêtre de chargement d'élément stockées dans la ligne de sous-unité en réponse à une opération de déclenchement pour une option de suppression sur la fenêtre flottante d'édition.

7. Procédé selon la revendication 6, dans lequel le procédé comprend en outre, après l'affichage de la fenêtre flottante d'édition pour une ligne de sous-unité correspondant à une première scène de storyboard en réponse à une opération de sélection prédéfinie pour la première scène de storyboard dans le premier tableau :
l'ajout d'au moins une ligne de sous-unité dans la ligne d'unité à laquelle appartient la ligne de sous-unité en fonction de la position de la ligne de sous-unité en réponse à une opération de déclenchement pour une option d'ajout dans la fenêtre flottante d'édition.

8. Procédé selon l'une quelconque des revendications 1-7, dans lequel le procédé comprend en outre, après la génération d'un modèle d'édition vidéo cible basé sur l'ensemble de descriptions de storyboard :
la publication du modèle d'édition vidéo cible.

9. Appareil pour générer un modèle d'édition vidéo, l'appareil comprenant :
un premier module d'affichage, configuré pour afficher une page d'édition de modèle en réponse à une opération de déclenchement pour un contrôle de création de modèle prédéfini ;
un premier module de génération, configuré pour générer un ensemble de descriptions de storyboard en réponse à une opération d'ajout pour au moins une parmi une scène de storyboard ou des informations d'indication de tournage sur la page d'édition de modèle ; dans lequel l'ensemble de descriptions de storyboard comprend au moins une scène de storyboard avec une relation séquentielle, la au moins une scène de storyboard étant respectivement pourvue d'informations d'indication de tournage respectives utilisées pour indiquer au moins une parmi une manière de filmer ou des caractéristiques de contenu de plan de la scène de storyboard ; et
un premier module de réception, configuré pour recevoir des informations de description de clip vidéo ajoutées sur la page d'édition de modèle pour au moins une scène de storyboard dans l'ensemble de descriptions de storyboard ; dans lequel les informations de description de clip vidéo sont utilisées pour indiquer un aperçu de contenu de tournage de la au moins une scène de storyboard ;
un second module de génération, configuré pour générer un modèle d'édition vidéo cible basé sur l'ensemble de descriptions de storyboard et les informations de description de clip vidéo ; dans lequel le modèle d'édition vidéo cible est configuré pour générer une vidéo de résultat cible, la vidéo de résultat cible comprenant au moins un élément vidéo initial qui est respectivement défini pour au moins une scène de storyboard dans le modèle d'édition vidéo cible,
dans lequel le modèle d'édition vidéo cible est généré à partir d'un premier tableau, une ligne d'unité du premier tableau présentant une relation de correspondance avec les informations de description de clip vidéo, et la ligne d'unité étant configurée pour stocker les informations de description de clip vidéo et les informations d'indication de tournage d'au moins une scène de storyboard correspondant aux informations de description de clip vidéo ; l'appareil étant **caractérisé en ce qu'**il comprend en outre :
un troisième module d'affichage, configuré pour afficher, en réponse à une opération de sélection prédéfinie pour les informations de description de premier clip vidéo dans le premier tableau, une fenêtre flottante d'édition pour une ligne d'unité correspondant aux informations de description de premier clip vidéo ; dans lequel la fenêtre flottante d'édition flotte au-dessus de la ligne d'unité correspondant aux informations de description de premier clip vidéo et comprend une option de suppression et une option d'ajout ;
un premier module de suppression, configuré pour supprimer la ligne d'unité et les informations de description de clip vidéo, ainsi que les informations d'indication de tournage de la scène de storyboard stockées dans la ligne d'unité, en réponse à une opération de déclenchement de l'option de suppression dans la fenêtre flottante d'édition ; et
un premier module d'ajout, configuré pour ajouter au moins une ligne d'unité dans le premier tableau en fonction de la position de la ligne d'unité en réponse à une opération de déclenchement de l'option d'ajout dans la fenêtre flottante d'édition.

10. Support de stockage lisible par ordinateur sur lequel sont stockées des instructions qui, lorsqu'elles sont exécutées sur un dispositif terminal, amènent le dispositif terminal à mettre en œuvre le procédé selon l'une quelconque des revendications 1-8.

11. Produit de programme informatique, comprenant des programmes/instructions informatiques qui, lorsqu'ils sont exécutés par un processeur, mettent en œuvre le procédé selon l'une quelconque des revendications 1-8.
